# EUROPEAN PATENT APPLICATION

(11) **EP 2 824 680 A1**
(43) Date of publication of application: **14.01.2015**
(21) Application number: 14173418.6
(22) Date of filing: 23.06.2014
(51) Int. Cl.: H01F 38/14, H01F 30/16

(54) **Noncontact power supply system and electromagnetic induction coil for noncontact power supply apparatus**

(30) Priority: 10.07.2013 JP 2013144709; 10.07.2013 JP 2013144710
(71) Applicant: Hosiden Corporation, Yao-shi, Osaka 581-0071 (JP)
(72) Inventor: Ohta, Fumio, Osaka, 5810071 (JP); Ema, Hiroshi, Osaka, 5810071 (JP); Sato, Eiji, Osaka, 5810071 (JP)
(74) Representative: Lemcke, Brommer & Partner Patentanwälte Partnerschaft mbB

(57) **Abstract**

A noncontact power supply system includes a power supply device (A) having a primary coil (1) acting as an electromagnetic induction coil for a noncontact power supply system, and a power receiving device (B) having a secondary coil (3, 30). The primary coil (1) has a primary core (11) and a winding wire (12). The secondary coil (3, 30) has a secondary core (31) and a winding wire (12). The primary core (11) includes a base segment (11a), a pair of extension segments (11b), and a pair of opposite segments (11c). The pair of opposite segments (11c) are arranged to allow a space (S) to be defined therebetween. The winding wire (12) is wound at least around the pair of opposite segments (11c). The secondary coil (3, 30) is arranged between the pair of opposite segments (11c) during power supply. The power receiving device (B) includes a magnetic sheet (5) that is in tight contact with an end surface (11d) of the secondary core (31) and has an area larger than that of the end surface (11d).

## Description

### TECHNICAL FILED

This disclosure relates to a noncontact power supply system and an electromagnetic induction coil for a noncontact power supply apparatus.

### RELATED ART

Conventionally, cordless electrical apparatuses such as mobile devices typically represented by mobile phones have a built-in rechargeable battery, in which battery charging is performed with a charging apparatus such as a cradle or an AC adaptor. Such a charging system allows a contact of the electrical apparatus to come into contact with a contact of the charging apparatus for electric conduction thereby to achieve power supply and battery charging.

A noncontact power supply system is being employed these days for achieving power supply without bringing the contacts into contact with each other. The noncontact power supply system is advantageously free from a risk of causing contact failure between contacts and easy to waterproof because no contact is exposed to the outside.

Currently, the noncontact power supply adopts an electromagnetic induction system, a radio-wave system, an electromagnetic field resonance system and the like. The electromagnetic induction system includes a secondary coil at the side of the electrical apparatus, and a primary coil at the side of the power supply apparatus. When electric power is supplied from the power supply apparatus to the electrical apparatus, those apparatuses are arranged so that the primary coil and the secondary coil face each other. Then, an electric current is supplied to the primary coil to generate magnetic fluxes at the primary coil. Such magnetic fluxes generate an electromotive force at the secondary coil by electromagnetic induction. As a result, the electrical apparatus can receive power supply.

With a conventional noncontact power supply system of the electromagnetic induction type, as disclosed in Japanese Unexamined Patent Application Publication No. (abbreviated to "JP" hereinafter) 2012-199505, a primary coil and a secondary coil are each formed as a plane coil. Those coils are arranged to face each other during power supply.

According to JP 9-238428 and JP 2005-137173, a secondary coil is rod-shaped (arc-shaped) and opposite ends of the secondary coil are held between ends of a primary coil.

JP 9-238428 and JP 2005-137173 each disclose a power supply system of the electromagnetic induction type. According to JP 9-238428, a toroidal core is divided into two parts, one of which is used as a core of the primary coil, the other of which is used as a core of the secondary coil. When electric power is supplied to an electrical apparatus, the electrical apparatus and a power supply apparatus are arranged so that cut sections of those cores face each other.

Further, according to JP 2005-137173, a power supply coil (primary coil) is provided with a core including a rod-shaped base portion, and leg portions extending from opposite ends of the base portion, in which each of the leg portions has an end that is bent inward. On the other hand, a power receiving coil (secondary coil) has a rod-shaped core. When electric power is supplied to an electrical apparatus, the electrical apparatus and a charging apparatus are arranged so that end surfaces of the core of the power receiving coil and end surfaces of the inwardly bent portions of the core of the power supplying coil face each other. Such an arrangement can limit a height of the charging apparatus and a height from the charging apparatus to the electrical apparatus.

### SUMMARY

On the other hand, with the plane coil disclosed in JP 2012-199505, there is a disadvantage that power supply efficiency is lowered due to positional displacement of the coil. Further, with the coils disclosed in JP 9-238428 and JP 2005-137173, while magnetic fluxes acting on the secondary coil are strengthened, the power supply efficiency may be lowered if the secondary coil is displaced in a direction perpendicular to its axis.

According to the arrangements disclosed in JP 9-238428 and JP 2005-137173, a winding wire is wound around only a small portion of the primary coil, which may lower the power supply efficiency.

A preferred embodiment provides a noncontact power supply system with improved power supply efficiency, and an electromagnetic induction coil for a noncontact power supply apparatus that achieves noncontact power supply with improved power supply efficiency.

According to a preferred embodiment of the noncontact power supply system of the present invention, the system includes a power receiving device for supplying electric power to an electrical apparatus, and a power supply device for supplying electric power to the power receiving device, the power supply device including a primary coil, the power receiving device including a secondary coil. The primary coil has a primary core made of a magnetic material, and a winding wire made of a conductive material and wound around the primary core. The secondary coil has a secondary core made of a magnetic material, and a winding wire made of a conductive material and would around the secondary core. The primary core has a pair of opposite segments arranged to allow their axes to lie parallel with each other, and to define a space therebetween. The secondary coil is arranged between the pair of opposite segments to allow the axes of the opposite segments to extend parallel with axes of the secondary core during power supply. The power receiving device includes a magnetic sheet that is in tight contact with an end surface of the secondary core and has an area larger than that of the end surface.

With the above arrangement, since the secondary coil is held between the pair of opposite segments of the primary coil, magnetic fluxes acting on the secondary coil can be strengthened. Further, since the magnetic sheet is placed in tight contact with the end surface of the secondary core to have an area larger than the area of that end surface, magnetic fluxes emitted toward the magnetic sheet also flow to the secondary core. More particularly, the provision of the magnetic sheet having the above arrangement allows the magnetic fluxes acting on the secondary core to be increased, thereby to enhance the power supply efficiency.

Further, with the above arrangement, magnetic resistance against the magnetic fluxes from the primary coil is lower in a direction along a plane of the magnetic sheet than in a direction extending through the magnetic sheet. Thus, of all the magnetic fluxes emitted toward the magnetic sheet, the magnetic fluxes flowing along the plane of the magnetic sheet are greater than the magnetic fluxes extending through the magnetic sheet. The magnetic fluxes that have flowed along the plane of the magnetic sheet, in turn, flow toward the secondary core from the tight contact portion with the end surface of the secondary core. Therefore, with this arrangement, the ratio of the magnetic fluxes that flow toward the secondary core, that is, contribute to power supply, to all the magnetic fluxes emitted toward the magnetic sheet can be increased. As a result, the power supply efficiency can be enhanced.

According to another preferred embodiment of the noncontact power supply system of the present invention, the magnetic sheet has flexibility. With such a feature, the magnetic sheet can be bent to move close to or away from the end surfaces of the opposite segments of the primary core. For example, even if the space defined between the end surfaces of the opposite segments of the primary core varies in dimension, the magnetic sheet can be bent depending on the dimension of the space, thereby to maintain a constant distance between the magnetic sheet and the end surfaces of the opposite segments of the primary core. As a result, decrease in power supply efficiency caused by variance in the distance between the primary coil and the secondary coil can be suppressed.

Generally, the power receiving device has metal elements typically represented by a power receiving circuit for converting an electromotive force generated at the secondary coil to electric power. It is not preferable that the magnetic fluxes act on those metal elements. In view of this, according to a further preferred embodiment of the noncontact power supply system of the present invention, the power receiving device further includes a metal element arranged parallel with the secondary coil, and the magnetic sheet covers the end surface of the secondary coil and an end surface of the metal element. With such an arrangement, the magnetic sheet functions to reduce the magnetic fluxes reaching the metal element, and consequently protect the metal element.

According to a still further preferred embodiment of the noncontact power supply system of the present invention, the secondary coil has a connecting terminal electrically connected to a power receiving circuit, and the connecting terminal is arranged inward of the end surface of the secondary core. With such an arrangement, even if the connecting terminal is provided, the end surface of the secondary core can be exposed to the outside. This allows the end surface of the secondary core to come into tight contact with the magnetic sheet.

According to a preferred embodiment of an electromagnetic induction coil for a noncontact power supply apparatus of the present invention, the coil includes a primary core made of a magnetic material, and a winding wire made of a conductive material and wound around the primary core. The primary core includes a base segment, a pair of extension segments extending from opposite ends of the base segment, a pair of opposite segments further extending from the pair of extension segments. The pair of opposite segments are arranged to define a space therebetween and to allow their axes to lie parallel with each other. The winding wire is wound at least around the pair of opposite segments.

With the above arrangement, in which the space is defined between the pair of opposite segments of the primary core, the secondary coil is placed in the space during power supply to supply an electric current to the winding wire. In this, since the winding wire is wound around the opposite segments of the primary core, a density of the magnetic fluxes at the opposite segments can be increased compared with the coil in which no winding wire is wound around the opposite segments as disclosed in JP 9-238428 and JP 2005-137173. As described above, since the secondary coil is positioned between the opposite segments, it is possible to generate the electromotive force at the secondary coil efficiently owing to the high density of the magnetic fluxes at the opposite segments.

Generally, the power supply efficiency decreases when the electromagnetic induction coil for a noncontact power supply apparatus is miniaturized. Thus, it is required to increase the electric current supplied to the electromagnetic induction coil. In such a case, however, the electromagnetic induction coil disadvantageously generates heat. With the electromagnetic induction coil according to the current embodiment, it is not required to increase the electric current supplied to the electromagnetic induction coil more than necessary since the power supply efficiency is high. Thus, the disadvantage of generating heat can be eliminated.

It should be noted that the expression "the axes lie parallel with each other" in the context of the current embodiment includes not only the case of being strictly "parallel" but also the case in which the axes are slightly deviated without departing from the spirit of the current embodiment. For example, when part of a toroidal core is cut out to form the primary core according to the current embodiment, opposite ends represented by cut portions act as the opposite segments, in which a tangential direction of each end of the opposite segments can be regarded as an axial direction. In this state, the axes of the opposite segments cannot extend strictly parallel with each other. Even in such a case, however, the magnetic fluxes generated at the pair of opposite segments extend substantially in the same direction, and act on the secondary coil together, which can generate the electromotive force efficiently at the secondary coil arranged between the pair of opposite segments. More particularly, the term "parallel" used for the axes of the pair of opposite segments in this context represents a concept that not only indicates the case of being strictly parallel but also includes a condition in which parallelism is decreased as long as the above object is achievable.

According to another preferred embodiment of the electromagnetic induction coil for a noncontact power supply apparatus of the present invention, the winding wire has a winding density that is greater in the opposite segments than in the base segment. With such an arrangement, the density of the magnetic fluxes at the opposite segments becomes greater than the density of the magnetic fluxes at the base segment. In other words, the density of the magnetic fluxes that more contribute to power supply is higher than the density of the magnetic flexes that less contribute to power supply. This can enhance the power supply efficiency.

It should be noted that the expression "winding density" of the winding wire in the base segment includes the case in which the winding density is zero, that is, no winding wire is wound around the base segment.

### BRIEF DESCRIPTION OF DRAWINGS

Fig. 1 is a schematic view of a noncontact power supply system;
Fig. 2 is an enlarged view of opposite segments of a primary coil;
Fig. 3 is a schematic view of a power receiving device;
Fig. 4 shows relationship between magnetic fluxes and a secondary coil having no magnetic sheets;
Fig. 5 shows relationship between magnetic fluxes and the secondary coil having magnetic sheets;
Fig. 6 is a schematic view of an electromagnetic induction coil and a secondary coil for a noncontact power supply apparatus;
Fig. 7 is a schematic view of an electromagnetic induction coil for a noncontact power supply apparatus according to a second embodiment; and
Fig. 8 is a schematic view of an electromagnetic induction coil for a noncontact power supply apparatus according to a further embodiment.

### DESCRIPTION OF EMBODIMENTS

### 1. Noncontact Power Supply System

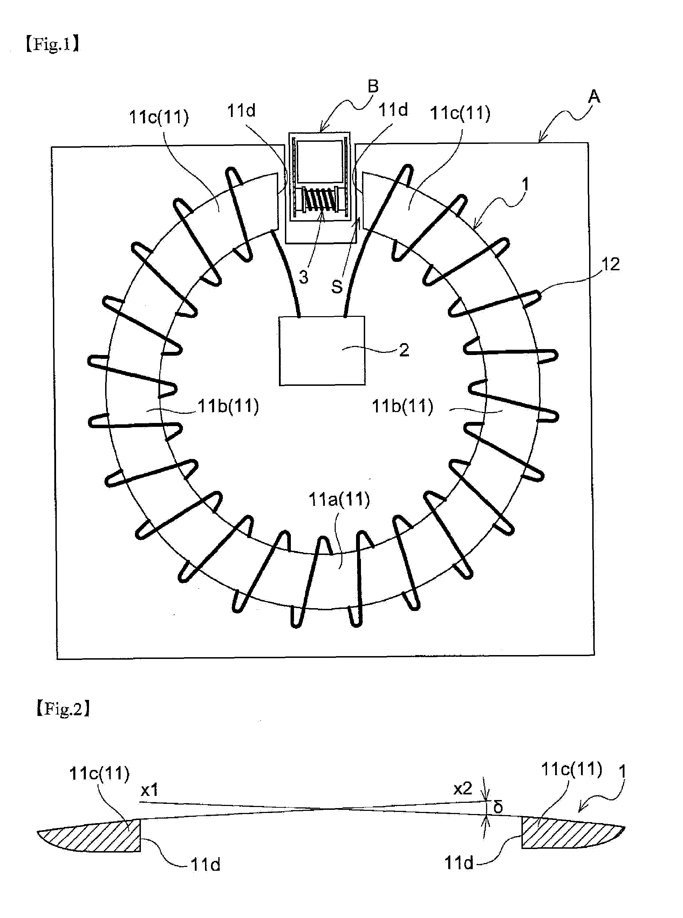

An embodiment of a noncontact power supply system according to the present invention will be described hereinafter in reference to the accompanying drawings. Fig. 1 is a schematic view of the noncontact power supply system according to one embodiment of the present invention. As illustrated, the noncontact power supply system includes a power receiving device B for supplying electric power to an electrical apparatus, and a power supply device A for supplying electric power to the power receiving device B. The power supply device A is configured to supply electric power to the power receiving device B by electromagnetic induction. The power supply device A is built in an electric power supply apparatus such as a charging device connected to a commercial power source, for example. On the other hand, the power receiving device B is built in the electrical apparatus such as a mobile phone, a mobile terminal, an electric toothbrush and the like.

### [Power Supply Device]

The power supply device A includes a primary coil 1, and a power supply circuit 2 for driving the primary coil 1 by electric power supplied from the commercial power source. The primary coil 1 includes a primary core 11 made of a magnetic material such as ferrite, and a winding wire 12 made of a conductive material and wound around the primary core 11. Since the arrangement of the power supply circuit 2 is well known, a description therefor is omitted here.

The primary core 11 in the current embodiment is provided with a base segment 11a, a pair of extension segments 11b, and a pair of opposite segments 11c. The pair of extension segments 11b extend from opposite ends of the base segment 11a, respectively. Further, the pair of opposite segments 11c extend from ends of the extension segments 11b, respectively, to substantially face each other. A space S is defined between end surfaces 11d of the pair of opposite segments 11c. In the current embodiment, the pair of end surfaces 11d are arranged to face each other and lie parallel with each other.

According to the current embodiment, the base segment 11a, the extension segments 11b and the opposite segments 11c are each circular in section and arranged in an arc, which are smoothly connected to each other. Such a primary core 11 can be manufactured by cutting out part of a toroidal core. In order to allow the pair of end surfaces 11d to face each other and lie parallel with each other, the cutting may be performed such that the front and the rear of the cutting center are equal to each other and the cut sections lie parallel with each other. By cutting out part of the toroidal core in this manner, the primary core 11 can be manufactured inexpensively.

As described above, the pair of opposite segments 11c are arranged to face each other. More specifically, axes of those opposite segments 11c are arranged parallel with each other at the end surfaces 11d. It should be noted that the term "parallel" in this context includes not only the case of being strictly "parallel" but also the case in which the axes cross each other at a micro angle δ. Further, the axes are joined as a series of center lines through the circular sections explained above to extend over one of the opposite segments 11c, one of the extension segments 11b, the base segment 11a, the other of the extension segments 11b and the other of the opposite segments 11c.

Fig. 2 is an enlarged view of a portion in the vicinity of the opposite segments 11c of the primary core 11. As described above, since the opposite segments 11c are each arranged in an arc in the current embodiment, the axes also each extend in an arc. When each of the opposite segments 11c is cut along a direction vertical to the axis to be divided into micro regions, an axial direction in each micro region can approximate a tangential direction in each micro region. For example, an axial direction in each of the end surfaces 11d represents a tangential direction of the opposite segment 11c at the end surface 11d. In Fig. 2, the axial direction of the opposite segment 11c is represented by the tangential direction of the end surface 11d. As shown in Fig. 2, in the primary core 11 according to the current embodiment, the axes x1 and x2 of the opposite segments 11c cross each other at the micro angle δ. Even in such a case, the axes of the pair of opposite segments 11c are regarded as extending parallel with each other.

### [Power Receiving Device]

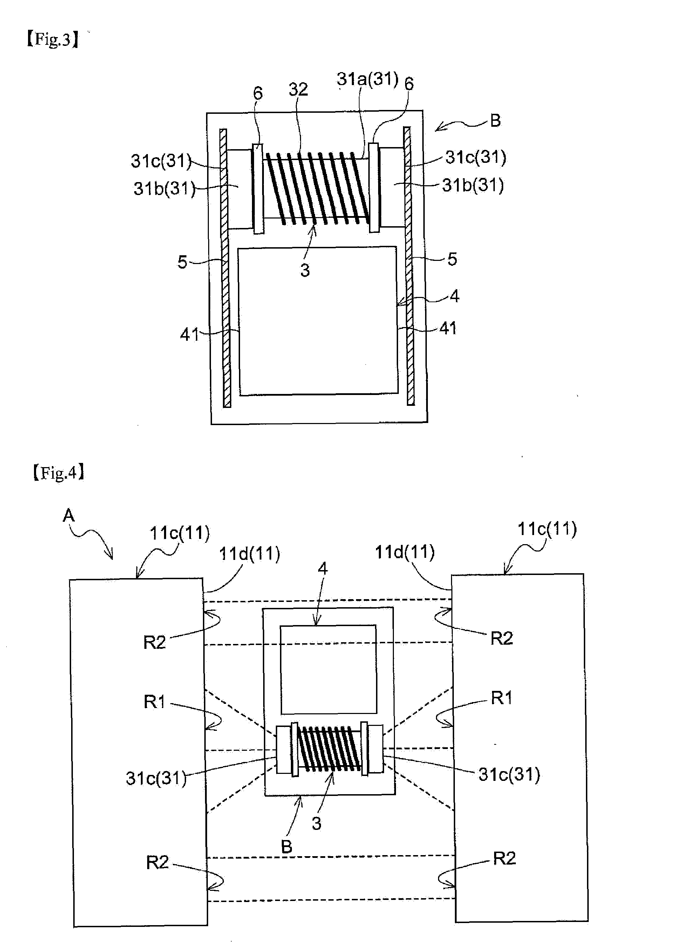

Referring to Fig. 3, the power receiving device B includes a secondary coil 3 generating an electromotive force based on magnetic fluxes generated by the primary coil 1, and a power receiving circuit 4 (an example of a metal element of the present invention) for converting the electromotive force of the secondary coil 3 to electric power. The power receiving circuit 4 is a known circuit made of an electric element and the like, and thus a detailed explanation therefor is omitted here. During power supply, the power supplying device A and the power receiving device B, that is, the electric power supply apparatus and the electrical apparatus, are positioned so that the primary coil 1 and the secondary coil 3 are arranged in a positional relationship shown in Fig. 1.

The secondary coil 3 includes a secondary core 31 made of a magnetic material such as ferrite, and a winding wire 32 wound around the secondary core 31. The secondary core 31 is generally rod-shaped and is formed of a shaft portion 31a and large-diameter portions 31b provided in opposite ends of the shaft portion 31a to have a larger diameter than the shaft portion 31 a.

A pair of connecting terminals 6 are provided around boundaries between the shaft portion 31a and the respective large-diameter portions 31b. Each of the connecting terminals 6 is made of a conductive material such as metal and configured to electrically connect the winding wire 32 to the power receiving circuit 4. The connecting terminal 6 is substantially disk-shaped with an opening defined in its central portion through which the shaft portion 31a extends. Such an arrangement of the connecting terminals 6 allows end surfaces of the large-diameter portions 31b, that is, end surfaces 31c of the secondary core 31, to be exposed.

The power receiving device B includes magnetic sheets 5 coming into tight contact with the end surfaces 31c of the exposed secondary core 31. It should be noted that the expression "tight contact" in the context of the current embodiment refers to not only a perfect tight-fit condition but also a loose-fit condition with a small gap (e.g., 0.5mm or less).

Each of the magnetic sheets 5 has an area larger than that of each of the end surfaces 31c of the secondary core 31. More particularly, the magnetic sheet 5 has a sufficient area to cover the end surface 31c of the secondary core 31 and an end surface 41 of the power receiving circuit 4 arranged parallel to the secondary core 31. In other words, the secondary core 31 and the power receiving circuit 4 are held between the pair of magnetic sheets 5. Further, the area of each magnetic sheet 5 is preferably equal to or larger than the area of the end surface 11d of the primary core 11.

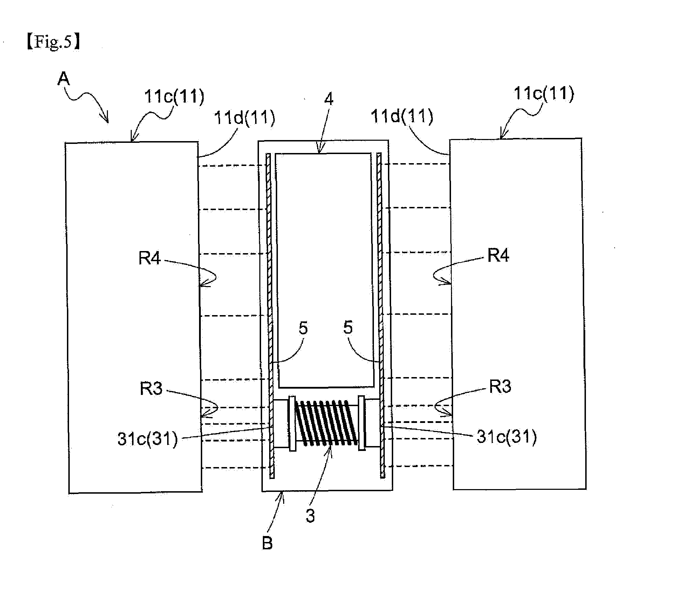

Figs. 4 and 5 show relationships between the magnetic fluxes generated by the power supplying device A (primary coil 1) and the secondary coil 3. In the drawings, while the magnetic fluxes are shown in dotted lines, their directions are not indicated. In Figs. 4 and 5, the secondary coil 3 (power receiving device B) has the same structure except the presence of the magnetic sheets 5.

Referring to Fig. 4 in which no magnetic sheets 5 are provided, the magnetic fluxes emitted from a region R1 of the end surface 11d of the primary core 11 that is substantially opposite to the end surface 31c of the secondary core 31 act on the secondary coil 3. On the other hand, the magnetic fluxes emitted from a region R2 other than the region R1 of the end surface 11d of the primary core 11 do not act on the secondary coil 3. More particularly, in the case where no magnetic sheets 5 are provided, the ratio of the magnetic fluxes acting on the secondary coil 3, that is, contributing to the power supply to all the magnetic fluxes emitted from the end surfaces 11d of the primary core 11 is only S1/(S1+S2), in which S1 and S2 represent the areas of regions R1 and R2, respectively.

Referring to Fig. 5, in turn, when the magnetic sheets 5 are arranged to come into tight contact with the end surfaces 31c of the secondary core 31, the magnetic fluxes emitted from a region R3 of the end surfaces 11d of the primary core 11 that is substantially opposite to the end surfaces 31c of the secondary core 31 act on the secondary coil 3. On the other hand, the magnetic fluxes emitted from a region R4 other than the region R3 of the end surfaces 11d of the primary core 11 are emitted toward the magnetic sheets 5. Owing to such an arrangement in the current embodiment, magnetic resistance against the magnetic fluxes from the primary coil 1 is lower in a direction along planes of the magnetic sheets 5 than in a direction extending through the magnetic sheets 5. Thus, most of the magnetic fluxes emitted toward the magnetic sheets 5 flow along the plane direction of the magnetic sheets 5, and then flow into the secondary core 31 from the tight contact portion with the end surfaces 31c of the secondary core 31. More particularly, when the magnetic sheets 5 are brought into tight contact with the end surfaces 31c of the secondary core 31, most of the magnetic fluxes emitted from the end surface 11d of the primary core 11 act on the secondary coil 3, thereby to increase the power supply efficiency.

Further, the power receiving circuit 4 is shielded from the end surfaces 11d of the primary core 11 by the magnetic sheets 5, and thus can be protected from the influence of the magnetic fluxes. In addition, since the area of each of the magnetic sheets 5 is larger than the area of each of the end surfaces 31c of the secondary core 31, it is possible to prevent decrease in power supply efficiency caused by positional displacement of the secondary coil 3 relative to the primary coil 1 in a plane perpendicular to the axial direction of the secondary coil 3.

While there is no particular limitation in the physical properties of the magnetic sheets 5, it is preferable that the magnetic sheets 5 have flexibility. The flexibility of the magnetic sheets 5 allows the magnetic sheets 5 to bend closer to or away from the end surfaces 11d of the primary core 11. As a result, even when the space S defined between the end surfaces 11d of the primary core 11 of the power supply devices A varies in dimension, the magnetic sheets 5 can be bent depending on the dimension of the space S, thereby to restrain decrease in the power supply efficiency. Incidentally, the tight contact between the magnetic sheets 5 and the secondary core 31 needs to be maintained, and thus regions of the magnetic sheets 5 other than the tight-contact regions are allowed to bend.

### 2. Electromagnetic Induction Coil for Noncontact Power Supply Apparatus

An electromagnetic induction coil (referred to as "primary coil" hereinafter) for a noncontact power supply apparatus according to the current embodiment will be described hereinafter in reference to the accompanying drawings.

### [First Embodiment]

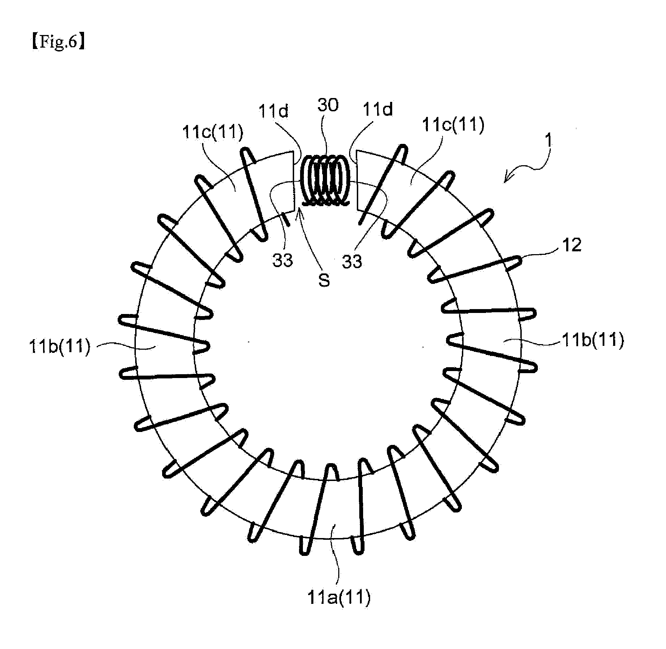

Fig. 6 is a schematic view of a primary coil 1 and a secondary coil 30. The primary coil 1 is built in an electric power supply apparatus (not shown) such as a charging device that supplies electric power to an electrical apparatus. On the other hand, the secondary coil 30 is built in the electrical apparatus (not shown) that receives electric power supply. While the primary coil 1 is connected to a power source and a power supply circuit, both of which are not illustrated in the drawing, the secondary coil 30 is connected to an unillustrated power receiving circuit. Electric power from the power receiving circuit is supplied to an electrical load such as the charging device of the electrical apparatus.

During power supply, the electric power supply apparatus and the electrical apparatus are positioned so that the primary coil 1 and the secondary coil 30 are arranged in a positional relationship shown in Fig. 6.

The secondary coil 30 is formed as an air-core coil having a winding wire made of a conductive material and wound around a horizontal axis in Fig. 6. The secondary coil 30 may be a cored coil with a core made of a magnetic material such as ferrite.

The primary coil 1 includes a primary core 11 made of a magnetic material such as ferrite, and a winding wire 12 made of a conductive material and wound around the primary core 11. Further, the primary core 11 is provided with a base segment 11 a, a pair of extension segments 11b, and a pair of opposite segments 11c.

The pair of extension segments 11b extend from opposite ends of the base segment 11 a, respectively. In turn, the pair of opposite segments 11c extend from ends of the extension segments 11b, respectively, to substantially face each other. The opposite segments 11c each have an end surface 11d at an end portion thereof. A space S is defined between the end surfaces 11d of the pair of opposite segments 11c. In the current embodiment, the pair of end surfaces 11d are arranged to face each other and lie parallel with each other.

According to the current embodiment, the primary core 11 is formed by cutting out part of a toroidal core. Consequently, the base segment 11a, the extension segments 11b and the opposite segments 11c are each circular in section and arranged in an arc, which are smoothly connected to each other to form the primary core 11. In order to allow the pair of end surfaces 11d to face each other and lie parallel with each other, the cutting may be performed such that the front and the rear of the cutting center are equal to each other and the cut sections lie parallel with each other. By cutting out part of the toroidal core in this manner, the primary core 11 can be manufactured inexpensively.

As described above, the pair of opposite segments 11c are arranged to face each other. More specifically, axes of those opposite segments 11c are arranged parallel with each other at the end surfaces 11d. It should be noted that the term "parallel" in this context includes not only the case of being strictly "parallel" but also the case in which the axes cross each other at a micro angle δ. Further, the axes are joined as a series of center lines of the circular sections explained above to extend over one of the opposite segments 11c, one of the extension segments 11b, the base segment 11a, the other of the extension segments 11b and the other of the opposite segments 11c.

Fig. 2 is an enlarged view of a portion in the vicinity of the opposite segments 11c of the primary core 11. As described above, since the opposite segments 11c are each arranged in an arc in the current embodiment, the axes also each extend in an arc. When each of the opposite segments 11c is cut along a direction vertical to the axis to be divided into micro regions, an axial direction in each micro region can approximate a tangential direction in each micro region. For example, an axial direction in each of the end surfaces 11d represents a tangential direction of the opposite segment 11c at the end surface 11d. In Fig. 2, the tangential direction of the end surface 11d is represented by the axial direction of the opposite segment 11c. As shown in Fig. 2, in the primary core 11 according to the current embodiment, the axes x1 and x2 of the opposite segments 11c cross each other at the micro angle δ. Even in such a case, the axes of the pair of opposite segments 11c are regarded as extending parallel with each other.

With the primary core 11 of the current embodiment, even if the axes of the pair of opposite segments 11c do not extend parallel with each other in a strict sense, the magnetic fluxes generated at the pair of opposite segments 11c are directed substantially in the same direction. Thus, when the secondary coil 30 is positioned in the space S defined between the pair of opposite segments 11c, the magnetic fluxes generated at the pair of opposite segments 11c act on the secondary coil 30. This allows an electromotive force to generate at the secondary coil 30 efficiently.

More particularly, the condition in which the axes of the pair of opposite segments 11c lie parallel with each other in the current embodiment is a requirement for achieving the above effect. Thus, the current embodiment includes the condition in which the axes of the pair of opposite segments 11c cross each other with the micro angle δ as long as the above effect is achievable.

Referring to Fig. 6, the secondary coil 30 is positioned within the space S defined between the end surfaces 11d during power supply. Further, the secondary coil 30 has end surfaces 33 facing the end surfaces 11d. It should be noted that an area of the end surface 33 of the secondary coil 30 is smaller than that of the end surface 11d of the primary core 11. There is a problem in the noncontact power supply of electromagnetic induction type that the power supply efficiency is lowered due to the positioning of the primary coil and the secondary coil. The above arrangement in the current embodiment prevents the decrease in power supply efficiency caused by the positional displacement of the secondary coil 30 in the direction perpendicular to the axial direction.

Still referring to Fig. 6, the winding wire 12 is wound around the entire primary core 11. More particularly, the winding wire 12 is wound around all of the base segment 11a, the extension segments 11b and the opposite segments 11c. It should be noted that the winding wire 12 is would around the pair of opposite segments 11c such that the magnetic fluxes generated at the respective opposite segments are oriented in substantially the same direction.

The power supply circuit is configured to drive the primary coil 1 constructed in the above manner through a known technique. In this time, magnetic fluxes are generated within the primary core 11 of the primary coil 1 in a direction based on the corkscrew law. More particularly, in a micro region of the primary coil 1, a magnetic field is generated along a tangential direction of the primary core 11 in the micro region depending on the winding direction of the winding wire 12.

Therefore, the magnetic fluxes are generated in substantially the same direction in the pair of opposite segments 11c, and act on the secondary coil 30 arranged within the space S. In other words, in such an arrangement, most of the magnetic fluxes that contribute to power supply come from the opposite segments 11c. Since the winding wire 12 is wound around the opposite segments 11c in the current embodiment, the magnetic fluxes that contribute to the power supply can be strengthened. More specifically, the ratio of the magnetic fluxes that contribute to power supply to all the magnetic fluxes can be increased, thereby to enhance the power supply efficiency. In addition, the strong magnetic fluxes that contribute to power supply allow electric power to be supplied even when the secondary coil 30 is slightly displaced from an optimal position in the axial direction.

Further, by forming the primary core 11 in an arc as in the current embodiment, magnetic fluxes leaking toward an inner side of the primary core 11 (in an inner direction of a circle forming the primary core 11) are easily return to the primary core 11. Thus, the leaking magnetic fluxes can be reduced, thereby to enhance the power supply efficiency.

### [Second Embodiment]

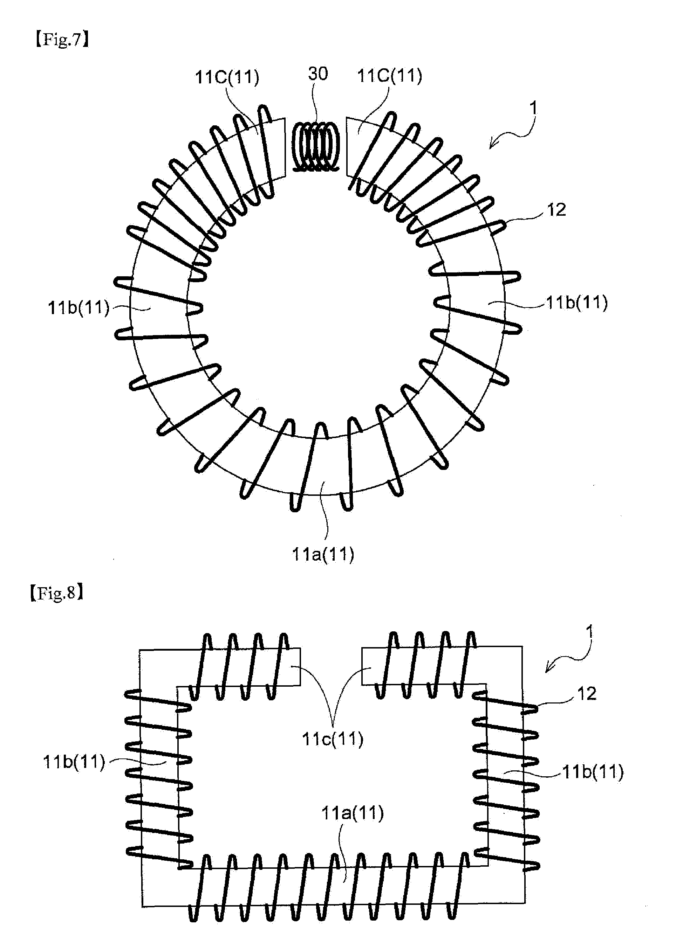

A primary coil 1 shown in Fig. 7 has the same fundamental construction as the primary coil 1 according to the first embodiment. More particularly, in the primary coil according to the current embodiment, a winding wire 12 is wound around a primary core 11 entirely, that is, a base segment 11a, extension segments 11b, and opposite segments 11c in the same manner as in the first embodiment. In the current embodiment, however, a winding density of the winding wire 12 is inconstant in part. To be more specific, the winding density of the winding wire 12 in the opposite segments 11c is greater than in the base segment 11 a.

A density of the magnetic fluxes generated at the coil is proportional to the winding density of the winding wire 12. Therefore, if the winding density of the coil is inconstant in part, the coil may be provided with a density of the magnetic fluxes being inconstant in part.

Hence, with the primary coil 1 according to the current embodiment as constructed as above, the density of the magnetic fluxes is greater in the opposite segments 11c than in the base segment 11 a. As described in the first embodiment, the magnetic fluxes generated at the opposite segments 11c mainly contribute to power supply in the primary coil 1 of the current embodiment. Since the density of the magnetic fluxes can be determined to be greater in the opposite segments 11c than in the base segment 11a in the primary coil 1 of the current embodiment, the ratio of the magnetic fluxes that contribute to power supply to all the magnetic fluxes generated in the primary coil 1 can be increased, thereby to enhance the power supply efficiency.

With the primary core 11 formed in an arc as in the current embodiment, the leaking magnetic fluxes generated from the primary coil 1 have a tendency to return to the inner side (radially inward) of the primary core 11 to allow magnetic loops to become small. As a result, the magnetic fluxes concentrate more in the inner side than in the outer side (radially outward) of the primary core 11, which can strengthen the magnetic fluxes in the opposite segments 11c to enhance the power supply efficiency.

### [Alternative Embodiments]

[1] According to the above embodiment, the end surfaces 11d of the pair of opposite segments 11c of the primary core 11 are arranged parallel with each other. However, the end surfaces 11d do not necessarily lie parallel with each other as long as the end portions of the opposite segments 11c face each other. Further, the end portions of the opposite segments 11c may have a shape other than the flat, plane configuration.
[2] According to the above embodiment, the base segment 11a, the extension segments 11b and the opposite segments 11c of the primary core 11 are each formed in an arc. Instead, they may be formed linearly. For example, as shown in Fig. 8, the extension segments 11b extend from the opposite ends of the linear base segment 11a substantially at the right angles, and the opposite segments 11c extend inwardly from the end portions of the extension segments 11b substantially at the right angles. With the primary core 11 constructed as above, while the recirculating efficiency of the magnetic fluxes leaking toward the inner side of the primary core 11 to the primary core 11 is slightly reduced compared with the primary core 11 formed in an arc, the magnetic fluxes at the opposite segments 11c can be strengthened in the same manner as in the above embodiment thereby to enhance the power supply efficiency.

### INDUSTRIAL APPLICABILITY

This disclosure can be utilized in any noncontact power supply systems and any electromagnetic coils for noncontact power supply apparatuses for small electrical apparatuses such as mobile phones, mobile terminals, electric toothbrushes, wireless headsets and the like.

## Claims

1. A noncontact power supply system comprising:
a power receiving device (B) for supplying electric power to an electrical apparatus; and
a power supply device (A) for supplying electric power to the power receiving device (B), the power supply device (A) including a primary coil (1), the power receiving device (B) including a secondary coil (3, 30),
wherein the primary coil (1) has a primary core (11) made of a magnetic material, and a winding wire (12) made of a conductive material and wound around the primary core (11),
wherein the secondary coil (3, 30) has a secondary core (31) made of a magnetic material, and a winding wire (12) made of a conductive material and would around the secondary core (31),
wherein the primary core (11) has a pair of opposite segments (11c) arranged to allow their axes to lie parallel with each other, and to define a space (S) therebetween,
wherein the secondary coil (3, 30) is arranged between the pair of opposite segments (11c) to allow the axes of the opposite segments (11c) to extend parallel with axes of the secondary core (31) during power supply, and
wherein the power receiving device (B) includes a magnetic sheet (5) that is in tight contact with an end surface (31c) of the secondary core (31) and has an area larger than that of the end surface (31c).

2. The noncontact power supply system according to claim 1, wherein the magnetic sheet (5) has flexibility.

3. The noncontact power supply system according to claim 1 or 2, wherein the power receiving device (B) further includes a metal element (4) arranged parallel with the secondary coil (3, 30), and
wherein the magnetic sheet (5) covers the end surface (31c) of the secondary coil (3, 30) and an end surface (41) of the metal element (4).

4. The noncontact power supply system according to any one of claims 1 to 3, wherein the secondary coil (3, 30) has a connecting terminal (6) electrically connected to a power receiving circuit (4), and
wherein the connecting terminal (6) is arranged inward of the end surface (31c) of the secondary core (31).

5. An electromagnetic induction coil for a noncontact power supply apparatus, the coil comprising:
a primary core (11) made of a magnetic material; and
a winding wire (12) made of a conductive material and wound around the primary core (11),
wherein the primary core (11) includes a base segment (11a), a pair of extension segments (11b) extending from opposite ends of the base segment (11a), a pair of opposite segments (11c) further extending from the pair of extension segments (11b),
wherein the pair of opposite segments (11c) are arranged to define a space (S) therebetween and to allow their axes to lie parallel with each other, and
wherein the winding wire (12) is wound at least around the pair of opposite segments (11c).

6. The electromagnetic induction coil according to claim 5, wherein the winding wire (12) has a winding density that is greater in the opposite segments (11c) than in the base segment (11a).
